## Europäisches Patentamt

## European Patent Office

## Office européen des brevets

(19)

(11) Veröffentlichungsnummer : **0 221 289 B1**

(12) # EUROPÄISCHE PATENTSCHRIFT

(45) Veröffentlichungstag der Patentschrift :
02.01.91 Patentblatt 91/01

(51) Int. Cl.⁵ : **B27F 1/02, B27C 5/00**

(21) Anmeldenummer : 86112442.8

(22) Anmeldetag : 09.09.86

(54) **Maschine zum Bearbeiten von Werkstücken aus Holz, insbesondere von Fensterhölzern und ähnlichen Werkstücken.**

(30) Priorität : 07.11.85 DE 3539488

(43) Veröffentlichungstag der Anmeldung :
13.05.87 Patentblatt 87/20

(45) Bekanntmachung des Hinweises auf die
Patenterteilung :
02.01.91 Patentblatt 91/01

(84) Benannte Vertragsstaaten :
AT BE CH DE FR GB IT LI LU NL SE

(56) Entgegenhaltungen :
EP-A- 0 203 038
FR-A- 2 561 161
GB-A- 2 118 095
US-A- 2 699 804
US-A- 3 022 994

(73) Patentinhaber : **Michael Weinig
Aktiengesellschaft
Weinigstrasse 2/4
D-6972 Tauberbischofsheim (DE)**

(72) Erfinder : **Schmitt, Gerhard
Weinweg 12
D-6971 Grossrinderfeld (DE)**

(74) Vertreter : **Jackisch-Kohl, Anna-Katharina
Patentanwälte Jackisch-Kohl & Kohl
Stuttgarter Strasse 115
D-7000 Stuttgart 30 (DE)**

EP 0 221 289 B1

Jouve, 18, rue Saint-Denis, 75001 PARIS

## Beschreibung

Die Erfindung betrifft eine Maschine zum Bearbeiten von Werkstücken aus Holz, holzähnlichen Werkstoffen, Kunststoff und dergleichen, insbesondere von Fensterhölzern und ähnlichen Werkstücken, nach dem Oberbegriff des Anspruches 1.

Bei einer solchen bekannten Maschine sind längs der beiden Transportbahnen ein Querprofilierwerkzeug und ein Längsprofilierwerkzeug angeordnet. Die Werkstücke werden zunächst mit ihrer Stirnseite am Querprofilierwerkzeug vorbeigeführt und hierbei bearbeitet. Mit dem Arbeitstisch werden die Werkstücke in die Übergabestelle transportiert, von der aus sie von der Transporteinrichtung übernommen und längs der anderen Transportbahn zur Längsprofilierung am Längsprofilierwerkzeug vorbeigeführt werden. Auf diese Weise werden die Werkstücke einzeln nacheinander vom Arbeitstisch in die Übergabestelle transportiert und von der Transporteinrichtung übernommen.

Der Erfindung liegt die Aufgabe zugrunde, die gattungsgemäße Maschine so auszubilden, daß der Zeitabstand zwischen den aufeinanderfolgenden, die Maschine durchlaufenden Werkstücken gering ist.

Diese Aufgabe wird bei der gattungsgemäßen Maschine erfindungsgemäß mit den kennzeichnenden Merkmalen des Anspruches 1 gelöst.

Bei der erfindungsgemäßen Maschine werden wenigstens zwei Werkstücke gleichzeitig mit dem Arbeitstisch in die Übergabestelle transportiert. Der Anschlag legt sich unter der wirkenden Gegenkraft an die in der Übergabestelle befindlichen Werkstücke an. Von der Transporteinrichtung wird zunächst das eine Werkstück erfaßt und in seiner Längsrichtung transportiert. Sobald dieses transportierte Werkstück von dem noch in der Übergabestelle befindlichen Werkstück freikommt, wird jenes Werkstück von dem unter der Gegenkraft stehenden Anschlag in den Bereich der Transporteinrichtung verschoben, so daß es unmittelbar im Anschluß an das zuvor transportierte Werkstück ebenfalls von der Transporteinrichtung erfaßt und weitertransportiert werden kann. Der Arbeitstisch kann in der Zwischenzeit in seine Ausgangslage zurückkehren und weitere Werkstücke aufnehmen, die dann an die Übergabestelle transportiert werden, sobald das letzte Werkstück die Übergabestelle verlassen hat. Auf diese Weise können die Werkstücke in äußerst kurzen Zeitabständen hintereinander die erfindungsgemäße Maschine durchlaufen, die infolge der erfindungsgemäßen Ausbildung eine hohe Leistung hat.

Weitere Merkmale von Ausführungsarten der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1 in Draufsicht einen Teil einer erfindungsgemäßen Maschine,

Fig. 2 die Maschine gemäß Fig. 1 in Seitenansicht,

Fig. 3 einen Teil der Maschine gemäß Fig. 1 in Vorderansicht.

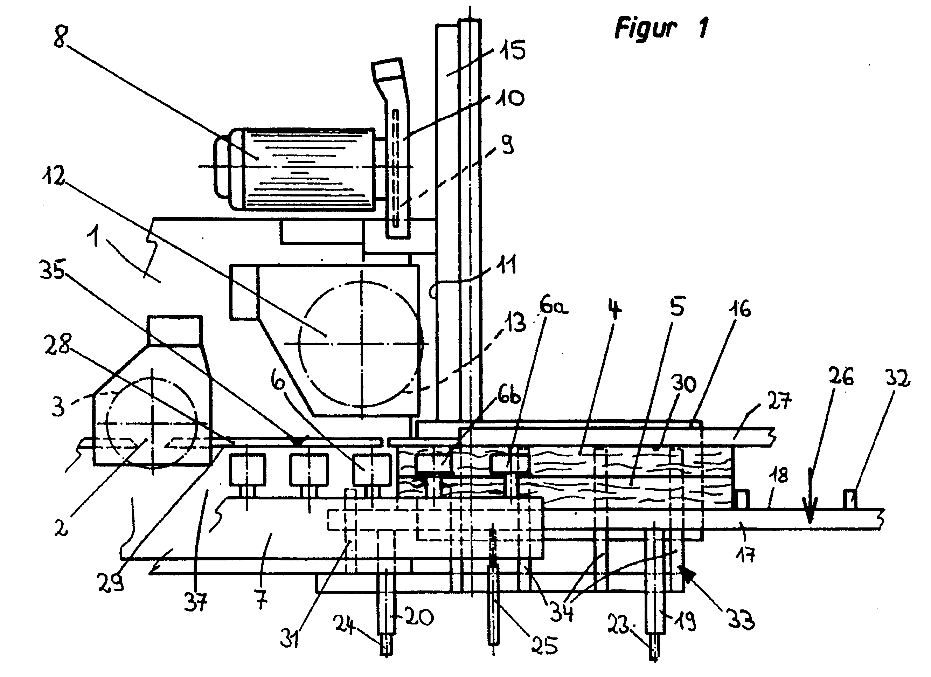

Die Maschine dient zum Bearbeiten von Werkstücken aus Holz, Kunststoff und dergleichen. Die in den Zeichnungen dargestellte Maschine wird zur Bearbeitung von Fensterhölzern und ähnlichen Werkstücken herangezogen und hat wenigstens eine Ständereinheit 1, auf der an einer Längsseite mindestens eine Profilierspindeleinheit 2 (Fig. 1) angeordnet ist. Sie hat eine aufrecht stehende (nicht dargestellte) Spindel, die ein mit einer strichpunktierten Linie angedeutetes Profilierwerkzeug 3 trägt. Die zu bearbeitenden Werkstücke 4, 5 werden mit ihrer Längsseite am Profilierwerkzeug 3 mittels einer durch Rollen 6 gebildeten Transporteinrichtung 7 auf einer Transportbahn 37 vorbeigeführt und hierbei längsprofiliert. Die Rollen bzw. die Walzen 6 sitzen auf horizontalen (nicht näher dargestellten) Wellen, die zum Transport der Werkstücke 4, 5 gleichsinnig in bekannter Weise angetrieben werden.

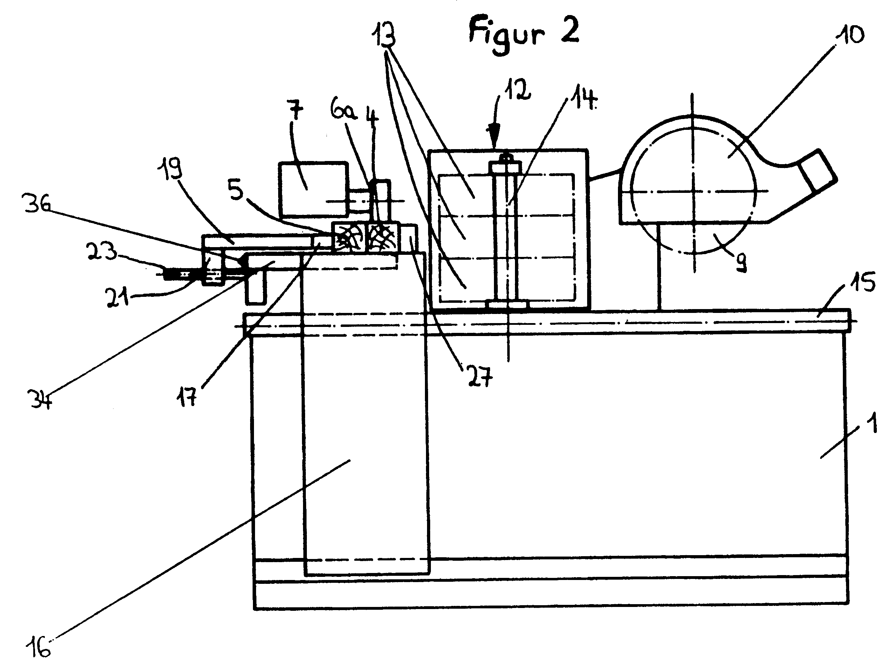

Die Ständereinheit 1 trägt an der der Profilierspindeleinheit 2 gegenüberliegenden Längsseite nahe der Schmalseite eine mit einem Motor 8 drehbar angetriebene Kreissäge 9, die unter einer Abdeckhaube 10 angeordnet ist. Im Bereich der Schmalseite 11 der Ständereinheit 1 befindet sich neben der Kreissäge 9 außerdem mindestens eine Zapfenschneidspindeleinheit 12, die mindestens ein um eine vertikale Achse drehbares Zapfenschneidwerkzeug 13 aufweist. Im Ausführungsbeispiel sitzen auf der Spindel 14 (Fig. 2) der Zapfenschneidspindeleinheit 12 übereinander drei Zapfenschneidwerkzeuge 13.

Längs der Schmalseite 11 der Ständereinheit 1 ist eine Transportbahn 15 für einen vorzugsweise als Rolltisch ausgebildeten Arbeitstisch 16 vorgesehen. Er trägt mindestens eine (nicht dargestellte) Spanneinrichtung, mit der die auf dem Arbeitstisch aufliegenden Werkstücke 4, 5 festgespannt werden können.

In der Ausgangslage befindet sich der Arbeitstisch 16 an dem in Fig. 1 oberen Ende der Transportbahn 15. Im dargestellten Ausführungsbeispiel werden auf dem Arbeitstisch 16 zwei zu bearbeitende Werkstück 4, 5, die im Ausführungsbeispiel Fensterhölzer sind, nebeneinander liegend festgespannt. Der Arbeitstisch 16 wird dann längs der Transportbahn 15 zunächst an der Kreissäge 9 vorbeigeführt, wobei die Werkstücke 4, 5 exakt auf Länge geschnitten werden. Anschließend gelangen die Werkstücke 4, 5 zur Zapfenschneidspindeleinheit 12, mit der sie an ihren Stirnseiten beim Vorschub des Arbeitstisches 16 bearbeitet werden. Der Arbeitstisch 16 gelangt schließlich in die in Fig. 1 dargestellte Endstellung. Die im Bereich des Arbeitstisches 16 bzw. der Werkstücke 4, 5 befindlichen letzten beiden Rollen 6a, 6b sind beim Einlaufen des Arbeitstisches angehoben, so daß die auf ihm festgespannten Werkstücke 4, 5 unter die Rollen 6a, 6b gelangen können. In der Endlage wird die Einspannung der Werkstücke 4, 5 gelöst, so daß sie von der Transporteinrichtung 7 nacheinander in ihrer Längsrichtung an der Profilierspindeleinheit 2 vorbeigeschoben werden können.

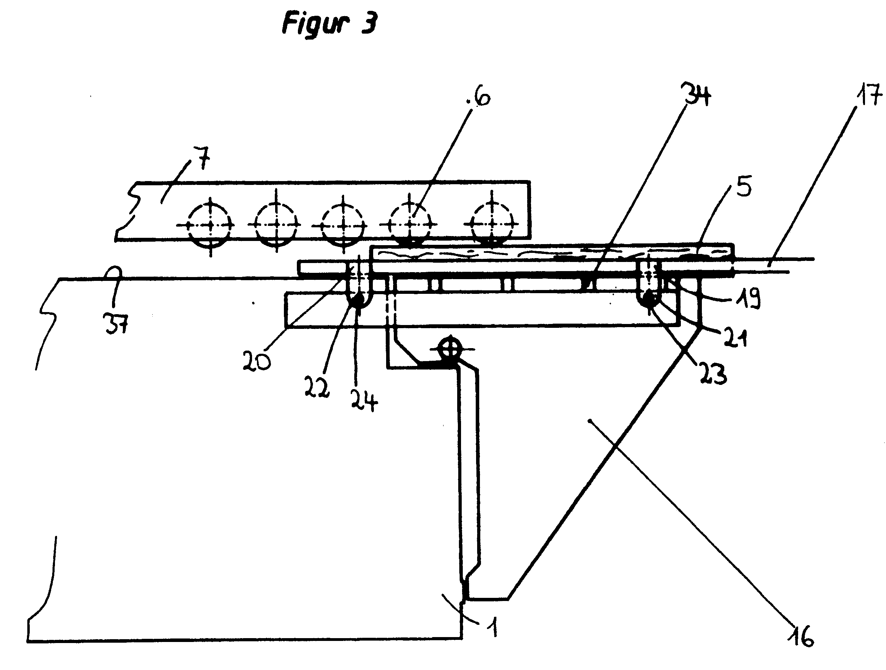

Im Transportweg der Werkstücke 4, 5 liegt im Bereich vor der Längsseite der Ständereinheit 1 ein Anschlag 17, der gegen eine Gegenkraft verschiebbar ist. Der Anschlag 17 ist vorzugsweise länger als die zu bearbeitende Werkstücke 4, 5, so daß sie in der Endstellung des Arbeitstisches 16 über ihre Länge am Anschlag anliegen können. Sie werden dadurch einwandfrei für ihren weiteren Transport ausgerichtet. Der Anschlag 17 ist auf seiner von der Anschlagfläche 18 abgewandten Rückseite mit zwei senkrecht von ihm abstehenden Armen 19, 20 versehen, die an ihrer Unterseite jeweils eine Buchse 21, 22 (Fig. 2 und 3) aufweisen, die auf Führungen 23 und 24 der Ständereinheit 1 sitzen. Der durch eine Leiste gebildete Anschlag 17 wird unter der Kraft einer pneumatischen Kolben-Zylinder-Einheit 25 entgegen Vorschubrichtung 26 des Arbeitstisches beaufschlagt und kann unter der Kraft dieser Einheit an einem (nicht dargestellten) Anschlag anliegen.

Die Maschine hat eine hohe Fertigungsleistung. Dies wird dadurch erreicht, daß auf den Arbeitstisch 16 wenigstens zwei zu bearbeitende Werkstücke 4, 5 festgespannt werden können, die zusammen an der Kreissäge 9 und an der Zapfenschneidspindeleinheit 12 vorbeigeführt werden. Hierbei werden die Werkstücke 4, 5 jeweils exakt auf Länge geschnitten und anschließend an ihren entsprechenden Stirnseiten bearbeitet. Nach dem ersten Durchgang durch die Kreissäge 9 und die Zapfenschneidspindeleinheit 12 kann der Arbeitstisch 16 auf der Transportbahn 15 in die Ausgangsstellung zurückgefahren werden, die Werkstücke 4, 5 um 180° gedreht und mit ihren anderen Stirnseiten nochmals an der Kreissäge und an der Zapfenschneidspindeleinheit vorbeigeführt werden. Bei diesem Vorschub gelangen die Werkstücke 4, 5 in Anlage an den Anschlag 17, der seine vorderste Endstellung einnimmt.

Beim Vorschub des Arbeitstisches 16 in Vorschubrichtung 26 wird dann der Anschlag 17 gegen die Kraft der Kolben-Zylinder-Einheit 25 durch die Werkstücke 4, 5 translatorisch bis in die in Fig. 1 dargestellte Endstellung verschoben. Die Werkstücke 4, 5 liegen mit ihren Längsseiten aneinander, wobei das Werkstück 4 seinerseits an einem auf dem Arbeitstisch 16 vorgesehenen Anschlag 27 anliegt und die Werkstücke gegen die Kraft der Kolben-Zylinder-Einheit 25 abstützt. Beim Einfahren des Arbeitstisches 16 in den Bereich der Transporteinrichtung 7 sind die beiden letzten Rollen 6a, 6b hochgetaktet, so daß die Werkstücke 4, 5 unter sie gelangen können. Sobald der Arbeitstisch 16 und die Werkstücke 4, 5 ihre Endstellung gemäß Fig. 1 erreicht haben, werden die beiden Rollen 6a, 6b abgesenkt, so daß sie auf dem am Anschlag 27 anliegenden Werkstück 4 zur Auflage kommen. Durch die drehbar angetriebenen Rollen 6a, 6b wird dann das Werkstück 4 in seiner Längsrichtung transportiert und von den weiteren Rollen 6 der Transporteinrichtung 7 an der Profilierspindeleinheit 2 vorbeigeführt, wobei es an seiner einen Längsseite entsprechend profiliert wird. Zur Führung des Werkstückes 4 dient eine Führung 28, die sich in Transportrichtung der Werkstücke 4, 5 erstreckt und deren Anschlagfläche 29 fluchtend zur Anschlagfläche 30 des Anschlages 27 liegt. Die Führung 28 erstreckt sich über die Länge der Transporteinrichtung 7, so daß die Werkstücke bei ihrem Längstransport einwandfrei geführt sind. Im Bereich der Profilierspindeleinheit 2 ist die Führung 28 für den Durchtritt des entsprechenden Profilierwerkzeuges unterbrochen.

Das Werkstück 5 wird beim Längstransport des Werkstückes 4 durch Reibung mitgenommen, bis es an einem Anschlag 31 zur Anlage kommt und an einem Weitertransport gehindert wird. Der Anschlag 31 ist vorzugsweise einstellbar, so daß er entsprechend der Länge der zu bearbeitenden Werkstücke eingestellt werden kann. Während das Werkstück 5 somit am Weitertransport durch die Transporteinrichtung 7 gehindert wird, wird das Werkstück 4 von den Rollen 6 der Transporteinrichtung 7 an der Profilierspindeleinheit 2 vorbeigeführt. Das Werkstück 5 liegt auf Ablagestegen 32 auf, die parallel zueinander liegen und sich über die Transporteinrichtung 7 hinaus in dessen Längsrichtung erstrecken. Sie sind am Anschlag 17 vorgesehen und ragen über dessen den Werkstücken 4, 5 zugewandten Längsseite.

Die zu bearbeitenden Werkstücke 4, 5 werden auf einen rechenartigen Übergabetisch 33 abgelegt, sobald der Arbeitstisch 16 aus der Endstellung gemäß Fig. 1 wieder in seine Ausgangslage zurückgefahren wird. Der Übergabetisch 33 erstreckt sich bis in den Anfangsbereich der Transporteinrichtung 7 und weist parallel zueinander liegende Auflageleisten 34 auf. Die Werkstücke 4, 5 werden dann an der bis in diesen Bereich sich erstreckenden Führung 28 abgestützt.

Im Transportweg der Werkstücke 4,5 ist ein Schalter 35 vorgesehen, der an der Führung 28 vorgesehen ist. Sobald das Werkstück 4 den Schalter 35 passiert, wird ein Schaltsignal abgegeben und die Rollen 6a, 6b vom Werkstück abgehoben. Es wird nunmehr von den nachfolgenden Rollen 6 der Transporteinrichtung 7 weitertransportiert. Das Werkstück 5 wird während des Längstransportes des Werkstückes 4 ständig durch den Anschlag 17 gegen das Werkstück 4 gedrückt. Sobald das Werkstück 4 am Werkstück 5 vorbeitransportiert wird, wird dieses Werkstück 5 von dem unter der Kraft der Kolben-Zylinder-Einheit 25 stehenden Anschlag 17 entgegen Vorschubrichtung 26 auf dem Übergabetisch 33 vorgeschoben, bis es fluchtend zur Anschlagfläche 29 liegt. Beim Vorschieben betätigt der Anschlag 17 einen Schalter 36 (Fig. 2), wodurch die Rollen 6a, 6b dann wieder abgesenkt werden, wenn das Werkstück 5 seine fluchtende Lage erreicht hat. Es wird dann von den Rollen in seine Längsrichtung transportiert. Der Schalter 36 ist im Ausführungsbeispiel am Übergabetisch 33 in Höhe der Buchse 21 vorgesehen, die beim Vorschieben des Anschlages 17 auf den Schalter trifft und ihn betätigt.

Der Schalter 36 kann auch so angeordnet sein, daß er durch das vom Anschlag 17 vorgeschobene Werkstück 5 betätigt wird. In diesem Falle kann der Schalter 36 auch an einer (nicht dargestellten) Klappe vorgesehen sein.Die Klappe wird zunächst durch das Werkstück 4 nach unten gedrückt gehalten. Sobald das Werkstück 4 von den Rollen 6a, 6b aus dem Bereich der Klappe transportiert wird, wird sie freigegeben, so daß sie aufwärts in eine Anschlagstellung für das nachfolgende Werkstück 5 schwenken kann.

Da die Werkstücke 4, 5 auf dem Übergabetisch 33 abgelegt werden, kann der Arbeitstisch 16 wieder in seine Ausgangsstellung zurückgefahren und mit weiteren Werkstücken beladen werden, während die Werkstücke 4, 5 zur Längsprofilierung an der Profilierspindeleinheit 2 vorbeitransportiert werden. Der Arbeitstisch 16 kann darum die neuen Werkstücke bereits wieder auf dem Übergabetisch 33 ablegen, wenn das Werkstück 5 gerade von den Rollen 6a, 6b erfaßt und in seiner Längsrichtung aus dem Bereich des Übergabetisches 33 transportiert worden ist. Somit können die Werkstücke in nur geringen Zeitabständen hintereinander durch die Maschine geführt werden.

Auf dem Arbeitstisch 16 können auch mehr als zwei Werkstücke festgespannt werden. Die Werkstücke werden dann nacheinander, wie dies zuvor beschrieben worden ist, von der Transporteinrichtung 7 erfaßt und an der Profilierspindeleinheit 2 vorbeigeführt. Sobald eines der Werkstücke von den anderen, auf dem Übergabetisch 33 befindlichen Werkstücken freikommt, werden diese Werkstücke vom Anschlag 17 entgegen Vorschubrichtung 26 vorgeschoben.

Zur Verstellung des Anschlages 17 ist anstelle der Führungen 23, 34 auch eine andere Verstelleinrichtung möglich, beispielsweise eine Parallelogrammverstell-Einrichtung, mit der der Anschlag durch eine Schwenkbewegung in Richtung auf den Anschlag 27 bewegt wird.

Die durch die Kolben-Zylinder-Einheit 25 ausgeübte Gegenkraft kann einstellbar sein, so daß eine Anpassung an die jeweiligen Betriebsbedingungen einfach möglich ist. Die auf den Anschlag 17 wirkende Gegenkraft kann beispielsweise auch durch eine mit einem Dämpfungsglied bzw. mit einer Dämpfungseinrichtung versehene Feder erzeugt werden.

Der Anschlag 17 mit der Werkstückauflage 32,

der Kolben-Zylinder-Einheit 25 und den Führungen 23, 24 ist vorteilhaft als Anbaueinheit ausgebildet, so daß schon im Einsatz befindliche Maschinen nachträglich mit dieser Anbaueinheit ausgerüstet werden können.

## Ansprüche

1. Maschine zum Bearbeiten von Werkstücken aus Holz, holzähnlichen Werkstoffen, Kunststoff und dergleichen, insbesondere von Fensterhölzern und ähnlichen Werkstücken, mit mindestens einem Ständer, der für das zu bearbeitende Werkstück wenigstens zwei winklig zueinander liegende Transportbahnen aufweist, und mit mindestens einem längs der einen Transportbahn verschiebbaren Arbeitstisch, mit dem die Werkstücke auf eine Übergabestelle transportierbar sind, von der aus die Werkstücke mit wenigstens einer Transporteinrichtung längs der anderen Transportbahn transportierbar sind, dadurch **gekennzeichnet**, daß im Vorschubbereich der vom Arbeitstisch (16) zugeführten Werkstücke (4, 5) wenigstens ein Anschlag (17) liegt, der beim Vorschub der Werkstücke (4, 5) in die Übergabestelle (33) verstellbar ist und unter einer Gegenkraft an den in der Übergabestelle (33) befindlichen Werkstücken (4, 5) anliegt.

2. Maschine nach Anspruch 1, dadurch gekennzeichhet, daß der Anschlag (17) gegen eine Gegenkraft verstellbar ist.

3. Maschine nach Anspruch 1 oder 2, dadurch gekennzeichnet, daß der Anschlag (17) im Bereich oberhalb der Übergabestelle (33) angeordnet ist.

4. Maschine nach einem der Ansprüche 1 bis 3, dadurch gekennzeichnet, daß der Anschlag (17) auf mindestens einer, vorzugsweise auf zwei am Ständer (1) vorgesehenen Führungen (23,24) verschiebbar ist.

5. Maschine nach einem der Ansprüche 1 bis 4, dadurch gekennzeichnet, daß sich der Anschlag (17) über die Länge der Werkstücke (4,5) erstreckt, vorzugsweise länger ist als sie.

6. Maschine nach einem der Ansprüche 1 bis 5, dadurch gekennzeichnet, daß der Anschlag (17) mit einer vorzugsweise durch parallel zueinander liegende Ablagestege gebildeten Werkstückauflage (32) versehen ist.

7. Maschine nach einem der Ansprüche 1 bis 6, dadurch gekennzeichnet, daß zur Erzeugung der auf den Anschlag (17) wirkenden Gegenkraft mindestens eine Kolben-Zylinder-Einheit (25) vorgesehen ist.

8. Maschine nach einem der Ansprüche 1 bis 7, dadurch gekennzeichnet, daß die Gegenkraft einstellbar ist.

9. Maschine nach einem der Ansprüche 1 bis 8, bei der mindestens eine im Bereich der Übergabestelle angeordnete Rolle der Transporteinrichtung für den Einlauf der Werkstücke in die Übergabestelle höhenverstellbar ist, dadurch gekennzeichnet, daß im Vorschubbereich der zum Längstransport der Werkstücke (4,5) dienenden Transportbahn (37) mindestens ein Schalter (35) zur Höhenverstellung der Rolle (6a,6b) vorgesehen ist.

10. Maschine nach einem der Ansprüche 1 bis 9, dadurch gekennzeichnet, daß zur Begrenzung des Vorschubes des einen Werkstückes (5) beim Längstransport des anderen Werkstückes (4) ein weiterer Anschlag (31) vorgesehen ist, der vorzugsweise verstellbar ist.

11. Maschine nach einem der Ansprüche 1 bis 10, bei der mindestens eine im Bereich der Übergabestelle angeordnete Rolle der Transporteinrichtung für den Einlauf der Werkstücke in die Übergabestelle höhenverstellbar ist, dadurch gekennzeichnet, daß im Verstellbereich des Anschlages (17) mindestens ein Schalter (36) liegt, mit dem die Rolle (6a,6b) zum Absenken betätigbar ist.

12. Maschine nach einem der Ansprüche 1 bis 11, dadurch gekennzeichnet, daß der Anschlag (17) mit der Werkstückauflage (32), der Kolben-Zylinder-Einheit (25) und der Führung (23,24) als Anbaueinheit ausgebildet ist.

**Claims**

1. Machine for machining work-pieces consisting of wood, materials similar to wood, synthetic material and the like, in particular timber for windows and similar work-pieces, with at least one upright, which comprises at least two conveying paths arranged at an angle with respect to each other for the work-piece to be machined, and with at least one working table able to slide along one conveying path and by which the work-pieces can be conveyed to a transfer point, from which the work-pieces can be conveyed by at least one conveying device along the other conveying path, characterised in that located in the feed range of the work-pieces (4, 5) supplied by the working table (16) is at least one stop (17), which at the time of feed of the work-pieces (4, 5) can be moved to the transfer point (33) and bears under a counter-force against the work-pieces (4, 5) located at the transfer point (33).

2. Machine according to Claim 1, characterised in that the stop (17) can be moved against a counter-force.

3. Machine according to Claim 1 or 2, characterised in that the stop (17) is located in the region above the transfer point (33).

4. Machine according to one of Claims 1 to 3, characterised in that the stop (17) is slideable on at least one, preferably on two guides (23, 24) provided on the upright (1).

5. Machine according to one of Claims 1 to 4, characterised in that the stop (17) extends over the length of the work-pieces (4, 5), preferably is longer than them.

6. Machine according to one of Claims 1 to 5, characterised in that the stop (17) is provided with a work-piece support (32) preferably formed by support webs lying parallel to each other.

7. Machine according to one of Claims 1 to 6, characterised in that at least one piston-cylinder unit (25) is provided for producing the counter-force acting on the stop (17).

8. Machine according to one of Claims 1 to 7, characterised in that the counter-force is adjustable.

9. Machine according to one of Claims 1 to 8, in which at least one roller of the conveying device, which is disposed in the region of the transfer point, for the entry of the work-pieces to the transfer point, is vertically adjustable, characterised in that provided in the feed region of the conveying path (37) serving for the longitudinal conveyance of the work-pieces (4, 5) is at least one switch (35) for the vertical adjustment of the rollers (6a, 6b).

10. Machine according to one of Claims 1 to 9, characterised in that provided for limiting the feed of one work-piece, (5) at the time of longitudinal conveyance of the other work-piece (4) is a further stop (31), which is preferably adjustable.

11. Machine according to one of Claims 1 to 10, in which at least one roller of the conveying device, disposed in the region of the transfer point, for the entry of the work-pieces to the transfer point, is vertically adjustable, characterised in that located in the adjustment region of the stop (17) is at least one switch (36), by which the rollers (6a, 6b) can be actuated for lowering.

12. Machine according to one of Claims 1 to 11, characterised in that the stop (17) with the work-piece support (32), the piston-cylinder unit (25) and the guide (23, 24) is constructed as an attachment unit.

**Revendications**

1. Machine pour le travail de pièces de bois, matériaux analogues au bois, matière plastique et autres, de bois de fenêtres et pièces similaires notamment, avec un montant au moins, qui présente deux bandes transporteuses au moins, formant un angle entre elles, pour la pièce à travailler, et avec une table de travail au moins, mobile le long de l'une des bandes transporteuses, qui permet d'amener les pièces à un poste de transfert, à partir duquel elles peuvent être acheminées, par un dispositif de transport au moins, le long de l'autre bande transporteuse, caractérisée en ce qu'une butée (17) au moins, prévue dans la zone d'avance des pièces (4, 5), amenées par la table de travail (16), peut se déplacer lors de l'avance des pièces (4, 5) au poste de transfert (33), et s'applique, sous l'effet d'une force antagoniste, sur les pièces (4, 5) situées au poste de transfert (33).

2. Machine suivant la revendication 1, caractérisée en ce que la butée (17) peut se déplacer contre une force antagoniste.

3. Machine suivant l'une des revendications 1 et 2, caractérisée en ce que la butée (17) se situe dans la zone susjacente au poste de transfert (33).

4. Machine suivant l'une quelconque des revendications 1 à 3, caractérisée en ce que la butée (17) peut se déplacer sur une glissière au moins, sur deux glissières (23, 24) de préférence, prévues sur le montant (1).

5. Machine suivant l'une quelconque des revendications 1 à 4, caractérisée en ce que la butée (17) s'étend sur la longueur des pièces (4, 5), est plus longue que ces dernières, de préférence.

6. Machine suivant l'une quelconque des revendications 1 à 5, caractérisée en ce que la butée (17) est munie d'un support de pièce (32), constitué, de préférence, par des traverses d'appui parallèles entre elles.

7. Machine suivant l'une quelconque des revendications 1 à 6, caractérisée en ce qu'un ensemble cylindre - piston (25) au moins est prévu pour produire la force antagoniste, exercée sur la butée (17).

8. Machine suivant l'une quelconque des revendications 1 à 7, caractérisée en ce que la force antagoniste est réglable.

9. Machine suivant l'une quelconque des revendications 1 à 8, sur laquelle un galet au moins du dispositif de transport, disposé dans la zone du poste de transfert, est mobile en hauteur pour l'arrivée des pièces au poste précité, caractérisée en ce qu'un commutateur (35), au moins, est prévu pour le déplacement en hauteur du galet (6a, 6b), dans la zone d'avance de la bande transporteuse (37), qui assure le transport longitudinal des pièces (4, 5).

10. Machine suivant l'une quelconque des revendications 1 à 9, caractérisée en ce qu'une autre butée (31), réglable de préférence, est prévue pour limiter l'avance de l'une des pièces (5), lors du transport longitudinal de l'autre pièce (4).

11. Machine suivant l'une quelconque des revendications 1 à 10, sur laquelle un galet au moins du dispositif de transport, disposé dans la zone du poste de transfert, est mobile en hauteur pour l'arrivée des pièces au poste précité, caractérisée en ce qu'un commutateur au moins (36), situé dans la zone de déplacement de la butée (17), permet d'abaisser le galet (6a, 6b).

12. Machine suivant l'une quelconque des revendications 1 à 11, caractérisée en ce que la butée (17), avec le support de pièce (32), l'ensemble cylindre - piston (25) et la glissière (23, 24), sont réalisés sous forme d'unité de montage.

Figur 1

Figur 2

# Figur 3

EP 0 221 289 B1